## Europäisches Patentamt
## European Patent Office
## Office européen des brevets

(19)

(11) Numéro de publication: **0 129 493**
**B1**

(12) **FASCICULE DE BREVET EUROPÉEN**

(45) Date de publication du fascicule du brevet:
**04.11.87**

(51) Int. Cl.⁴: **B 62 D 55/00,** B 62 D 55/24

(21) Numéro de dépôt: **84460006.4**

(22) Date de dépôt: **18.06.84**

(54) **Chenille de véhicule à pneumatiques.**

(30) Priorité: **20.06.83 FR 8310287**
**27.03.84 FR 8404977**

(43) Date de publication de la demande:
**27.12.84 Bulletin 84/52**

(45) Mention de la délivrance du brevet:
**04.11.87 Bulletin 87/45**

(84) Etats contractants désignés:
**AT BE CH DE FR GB IT LI NL SE**

(56) Documents cité:
**CA-A-874 871**
**CA-A-956 351**
**DE-U-1 974 445**
**FR-A-1 320 264**
**FR-A-2 434 075**
**US-A-4 099 794**

(73) Titulaire: **Lamy, André, Route de Saint- Malo,**
**F-35350 Saint Coulomb (FR)**

(72) Inventeur: **Lamy, André, Route de Saint- Malo,**
**F-35350 Saint Coulomb (FR)**

(74) Mandataire: **Le Guen, Louis François, Cabinet**
**Louis Le Guen 1, avenue Edouard VII B.P. 91,**
**F-35802 Dinard Cédex (FR)**

LIBER, STOCKHOLM 1987

EP 0 129 493 B1

## Description

La présente invention concerne une chenille de véhicule à roues munies de pneumatiques comportant des barres crampons munies d'éléments guides flancs de roues et appelé à circuler sur des sols très meubles tels que la vase ou la neige.

On peut ranger les chenilles en deux grandes catégories: les chenilles formées de maillons entièrement métalliques accrochés ensemble pour former une chaîne sans fin, et les chenilles à bandes sans fin comportant des barres crampons de place en place.

A titre d'exemples faisant partie de la première catégorie, on peut citer les chenilles décrites dans les documents US-A-4 099 794 et DE-U-1 974 445. Ces chenilles sont lourdes et ne peuvent, en particulier, être utilisées dans la vase. D'autre part, les articulations des maillons souffrent des matières solides interstitielles qui viennent s'y loger.

A titre d'exemples de chenilles à bandes sans fin, on peut citer les chenilles décrites dans les documents CA-A-874 871 et CA-A-956 351. Ces chenilles à bandes sans fin n'ont plus d'articulations. Toutefois, dans les documents cités, on ne considère que des entraînements par barbotin, si bien que les roues à pneumatiques n'y sont pas motrices.

Un objet de l'invention consiste à prévoir une chenille à roues à pneumatiques motrices utilisant le principe des bandes sans fin, sans articulation. Dans ce genre de chenilles, les roues motrices tendent, notamment en virage, à monter sur les éléments guides flancs de roues.

Un autre objet de l'invention consiste à prévoir des guides flancs efficaces pour les roues tel que celles-ci ne puissent sortir du guide.

Un autre objet de l'invention consiste à prévoir des éléments guides flancs de roue qui coopèrent avec les sculptures du pourtour externe des flancs des pneumatiques pour collaborer à l'entraînement de la bande sans fin.

Ces objets de l'invention sont atteints par la mise en oeuvre de combinaisons de moyens définis dans les revendications complétant la présente description.

Les caractéristiques de l'invention apparaîtront clairement à la lecture de la description d'exemples de réalisation, ladite description étant faite en relation avec les dessins joints, parmi lesquels:

la Fig. 1 est une vue en coupe transversale d'une chenille devant une paire d'éléments guides flancs de roue en portion de cylindre, selon un exemple de réalisation, et

la Fig. 2 est une vue de dessus d'une paire d'éléments guides flancs de roue en portion de cylindre, seul le pneumatique étant coupé selon la ligne II-II de la Fig. 1.

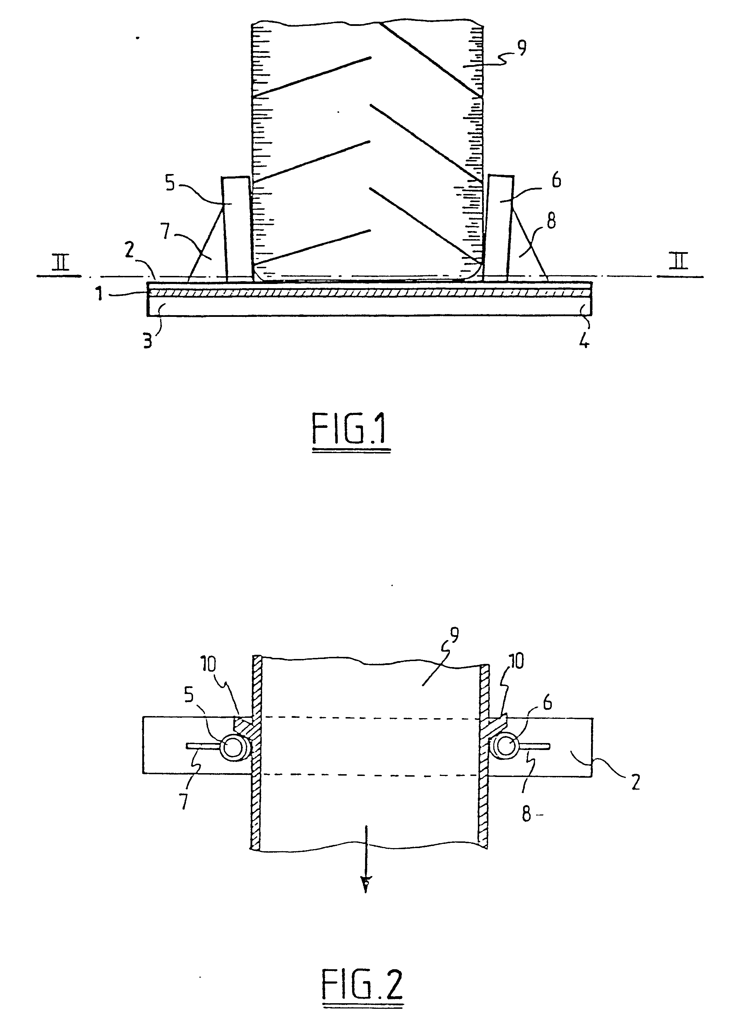

A la Fig. 1, la bande sans fin 1 est serrée entre deux traverses métalliques 2 et 3. Les traverses 2 et 3 sont des rectangles de mêmes dimensions. La traverse 3, qui se trouve sur la face extérieure de la bande sans fin, et qui est représentée partiellement en coupe verticale à la Fig. 1, a un profil en U de manière à former des crampons 4. Les traverses 2 et 3 sont reliées ensemble par des boulons.

Près de chaque extrémité de la traverse 2, se trouvent deux éléments guides flancs de roue, 5 et 6 qui sont fixés symétriquement près de chaque extrémité de la traverse 2. Les éléments 5 et 6 sont des portions de cylindre, creux de préférence. Les éléments 5 et 6 font un angle légèrement obtus avec la traverse 2, leurs extrémités supérieures étant plus espacées que leurs extrémités inférieures. Dans un exemple de réalisation préféré, l'angle des éléments 5 et 6 avec la traverse 2 est sensiblement de 92°. Les éléments 5 et 6 ont une longueur sensiblement égale à la hauteur du flanc des pneumatiques. En pratique, des goussets 7 et 8, de forme généralement rectangulaire, ont un côté soudé le long de la directrice extérieure des éléments 4 et 5 et un autre côté soudé à la plaque 2. Ils servent d'arcs-boutants aux éléments 5 et 6 dans le sens transversal, dans lequel se produisent les efforts les plus violents.

On voit à la Fig. 2 que l'espacement entre les bases des éléments 5 et 6 est légèrement inférieure à la largeur du pneumatique 9. Le pneumatique 9 est donc pincé entre deux éléments 5 et 6 d'une paire et les sculptures 10 du pourtour externe du flanc du pneumatique sont extérieures par rapport aux directrices internes des éléments 5 et 6, de sorte que les éléments 5 et 6 et, par conséquent, la bande sans fin sont entraînés quand la roue tourne. Cet apport d'entraînement est particulièrement intéressant lors des changements de direction importants.

Les éléments 5 et 6, les traverses 2 et 3 et les goussets 7 et 8 sont fabriqués en un alliage léger présentant de bonnes qualités de résistance. En pratique, les éléments 5 et 6, les goussets 7 et 8 et la traverse 2 peuvent ne former qu'une seule pièce provenant directement de moulage. Les traverses 2 et 3 sont généralement reliées par des boulons.

L'emploi de tels guides flancs de roue permet d'obtenir un gain de poids assez considérable. Ainsi, pour une bande sans fin de 8,5 m environ, correspondant à une chenille de 3,75 m, on gagne 500 kg par chenille, soit une tonne par vehicule, et près de 20 g/cm$^2$ de pression au sol.

Le profil de la traverse extérieure 3, dont les branches forment les crampons 4, peut avoir des formes différentes selon l'état du terrain sur laquelle la chenille est appelée à travailler. D'une manière générale, la traverse 3 aura un profil en U mais ses branche peuvent être plus ou moins longues. Les deux branches du U peuvent également avoir une longueur différente. Dans la vase, on aura intérêt à avoir des branches égales relativement longues. Par contre, sur un terrain moyennement meuble, on peut utiliser une traverse en U dont la branche d'attaque, en marche avant, est plus longue que l'autre branche. Un tel crampon abîmera moins le terrain et la vase aura tendance à mieux s'évacuer entre ses branches. Il est à noter que les arétes des crampons sont toutes arrondies.

**Revendications**

1. Chenille de véhicule à roues munies de pneumatiques, qui comporte des barres crampons munies d'éléments guides flancs de roue (5, 6), caractérisée en ce qu'elle est formée d'une bande sans fin (1), chaque barre crampon étant formée d'une traverse interne (2) portant les éléments guides flancs (5, 6) et d'une traverse externe (3) reliées entre elles par des moyens de serrage et entre lesquelles se trouve serrée la bande sans fin (1), les éléments guides flancs étant des portions de cylindre (5, 6) qui font un angle très légèrement obtus avec la traverse interne (2).

2. Chenille selon la revendication 1, caractérisée en ce que ladite bande sans fin (1) a une largeur égale à la longueur des barres crampons (2, 3).

3. Chenille selon la revendication 1 ou 2, caractérisée en ce que l'espacement des extrémités inférieures desdites portions de cylindre (5, 6) est légèrement inférieur à la largeur des pneumatiques (9) des roues.

4. Chenille selon l'une des revendications 1 à 3, caractérisée en ce que lesdites portions de cylindre (5, 6) ont une hauteur pratiquement équivalente à la hauteur des flancs des pneumatiques (9) des roues.

5. Chenille selon l'une des revendications 1 à 4, caractérisée en ce que lesdites portions de cylindre (5, 6) sont des portions de tubes creux.

6. Chenille selon l'une des revendications 1 à 5, caractérisée en ce que ledit angle obtus est égale à 92° environ.

7. Chenille selon d'une des revendications 1 à 6, caractérisée en ce que des goussets (7, 8) sont respectivement soudés entre les directrices externes desdites portions de cylindre (5, 6) et les traverses internes (2).

**Patentansprüche**

1. Raupe für Fahrzeug mit Luftbereifung, mit einem Klemmbügel mit Radflanken-Führungselementen (5, 6) dadurch gekennzeichnet, daß sie ein endloses Band (1) aufweist, daß jeder Klemmbügel aus einem inneren Querstab (2), der die Radflanken-Führungselemente (5, 6) trägt, und einem äußeren Querstab (3) besteht, der an diesem durch Haltemittel befestigt ist, daß das endlose Band (1) zwischen diesen eingespannt ist, und daß die Radflanken-Führungselemente zylindrische Teile (5, 6) sind, von denen jedes mit dem inneren Querstab (2) einen Winkel bildet, der 90° etwas übersteigt.

2. Raupe nach Anspruch 1, dadurch gekennzeichnet, daß die Breite des endlosen Bandes (1) gleich der Länge der Querstäbe (2, 3) ist.

3. Raupe nach Anspruch 1 oder 2, dadurch gekennzeichnet, daß der Abstand zwischen den unteren Enden der zylindrischen Teile (5, 6) etwas kleiner ist als die Breite der Radreifen (9).

4. Raupe nach einem der Ansprüche 1-3, dadurch gekennzeichnet, daß die Höhe der zylindrischen Teile (5, 6) im wesentlichen dieselbe ist als die der Flanken der Reifen (9).

5. Raupe nach einem der Ansprüche 1-4, dadurch gekennzeichnet, daß die zylindrischen Teile (5, 6) Teile eines hohlen Rohres sind.

6. Raupe nach einem der Ansprüche 1-5, dadurch gekennzeichnet, daß der Winkel zwischen jedem zylindrischen Teil (5, 6) und dem inneren Querstab (9) etwa 92° beträgt.

7. Raupe nach einem der Ansprüche 1-6, dadurch gekennzeichnet, daß zwischen den äußeren Mantellinien der zylindrischen Teile (5, 6) und den inneren Querstäben (2) Eckbleche (7, 8) eingeschweißt sind.

**Claims**

1. A track for a vehicle having pneumatic tyres, having grouser bars with wheel-flank guiding elements (5, 6), characterized in that it is comprised of an endless strip (1), each grouser bar being formed of an inner crossbar (2) bearing said wheel-flank guiding elements (5, 6), and an outer crossbar (3) secured thereto by securing means, the endless strip (1) being gripped therebetween, the wheel-flank guiding elements being cylinder parts (5, 6) each defining with the internal crossbar (2) an angle which slightly exceeds 90°.

2. A track according to claim 1, characterized in that the width of said endless strip (1) is equal to the length of the grouser bars (2, 3).

3. A track according to claim 1 or 2, characterized in that the distance between the lower ends of said cylinder parts (5, 6) is slightly less than the width of the wheel tyres (9).

4. A track according to anyone of claims 1-3, characterized in that the height of said cylinder parts (5, 6) is substantially the same as the one of the flanks of the tyres (9).

5. A track according to anyone of claims 1-4, characterized in that said cylinder parts (5, 6) are parts of hollow tube.

6. A track according to anyone of claims 1-5, characterized in that said angle defined between each cylinder part (5, 6) and the internal crossbar (2) is of about 92°.

7. A track according to anyone of claims 1-6, characterized in that gussets are respectively welded between the external directrixes of said cylinder portions (5, 6) and the internal crossbars (2).

0 129 493

FIG.1

FIG.2